# EUROPÄISCHE PATENTANMELDUNG

(11) **EP 2 088 668 A2**
(43) Veröffentlichungstag der Anmeldung: **12.08.2009**
(21) Anmeldenummer: 08171303.4
(22) Anmeldetag: 11.12.2008
(51) Int. Cl.: H02M 5/27

(54) **Statischer Umformer**

(30) Priorität: 06.02.2008 DE 102008007658
(71) Anmelder: Siemens Aktiengesellschaft, 80333 München (DE)
(72) Erfinder: Gruber, Rainer, Dr., 91560 Heilsbronn (DE); Halfmann, Ulrich, 91094 Bräuningshof (DE); Hiller, Marc, 90455 Nürnberg (DE); Recker, Wolfgang, 91096 Möhrendorf (DE)

(57) **Zusammenfassung**

Die Erfindung bezieht sich auf einen statischen Umformer mit einem drehstrom- und einphasenseitigen Stromrichter (2,4), die gleichspannungsseitig miteinander elektrisch leitend verknüpft sind, und die wechselspannungsseitig jeweils mit einem speisenden Drehstrom-Netz und einem aufnehmenden Einphasen-Netz elektrisch leitend verbunden sind. Erfindungsgemäß ist als drehstromseitiger Stromrichter (2) ein netzgeführter Stromrichter vorgesehen, wobei der einphasenseitige Stromrichter (4) zwei gleichspannungsseitig parallel geschaltete Phasenmodule (12) aufweist, deren Stromrichterzweige (T1,T2, T3,T4) jeweils wenigstens ein zweipoliges Subsystem (14) aufweisen. Somit erhält man einen statischen Umformer, der gegenüber einem bekannten statischen Umformer einfacher und kostengünstiger ist.

## Beschreibung

Die Erfindung bezieht sich auf einen statischen Umformer gemäß Oberbegriff des Anspruchs 1.

Derartige statische Umformer werden dazu verwendet, Bahnstromnetze mit Landesnetzen zu koppeln. Da die Bahnstromnetze eine Frequenz von 16 2/3Hz oder 25Hz und die Landesnetze eine Frequenz von 50Hz oder 60Hz aufweisen und die Bahnstromnetze einphasig und die Landesnetze dreiphasig ausgebildet sind, können diese beiden Netze nicht direkt gekoppelt werden. Zur Kopplung dieser beiden unterschiedlichen Netze werden statische Umformer eingesetzt, die auch statische Bahnumrichter bzw. statische Frequenzumrichter genannt werden.

In der Veröffentlichung mit dem Titel "Konzepte zur Bereitstellung von 16 2/3Hz-Energie mittels Leistungselektronik", abgedruckt in der DE-Zeitschrift "eb - Elektrische Bahnen", Band 89, 1991, Heft 11, Seiten 395 bis 397, sind zwei Konzepte für einen statischen Umformer bekannt. Das eine Konzept weist einen gemeinsamen Zwischenkreis auf, wogegen das zweite Konzept modular und mit separaten Zwischenkreisen versehen ist.

Das Umrichter-Konzept mit einem gemeinsamen Zwischenkreis weist drehstromseitig (Landesnetz) zwei Thyristor-Umkehrstromrichter auf, die drehstromseitig mittels eines Transformators mit einem speisenden Netz und gleichspannungsseitig elektrisch parallel geschaltet sind. Der einphasenseitige Stromrichter (Bahnnetz) setzt sich aus 12 GTO-Vierquadrantenstellern zusammen, die wechselspannungsseitig jeweils mit einer Transformatorwicklung versehen sind. Gleichspannungsseitig sind diese GTO-Vierquadrantensteller elektrisch parallel zum Spannungszwischenkreis geschaltet, der einen Zwischenkreiskondensator und einen Saugkreis aufweist. Die Transformatorenwicklungen sind auf der Primärseite elektrisch in Reihe geschaltet, so dass eine Spannungsaddition stattfindet.

Das modulare Konzept eines statischen Umformers besteht aus einer Parallelschaltung mehrerer Einheiten, die jeweils drehstromseitig und einphasenseitig jeweils 3 GTO-Vierquadrantensteller mit zugehörigen Transformatorwicklungen aufweisen. Gleichzeitig sind diese 6 GTO-Vierquadrantensteller einer Einheit mittels eines Spannungszwischenkreises miteinander gekoppelt. Durch dieses modulare Konzept werden alle GTO-Phasenmodule der drehstrom- und einphasenseitigen GTO-Vierquadrantensteller in etwa gleich belastet.

Aus der Veröffentlichung mit dem Titel "Statischer Umformer zur Kupplung von Bahnnetzen und Landesnetzen", abgedruckt in der DE-Zeitschrift "eb - Elektrische Bahnen", Band 89, 1991, Heft 11, Seiten 398 bis 400, ist ein weiteres Konzept eines statischen Umformers bekannt. Bei diesem Konzept sind auf der Drehstromseite des statischen Umformers zwei Pulswechselrichter und auf der Einphasenseite vier Vierquadrantensteller mit zugehörigen Transformatorwicklungen angeordnet. Die Pulswechselrichter und der Spannungszwischenkreis sind jeweils als Dreipunktschaltung ausgeführt. Drehspannungsseitig sind diese Pulswechselrichter mittels eines Transformators mit einem speisenden Drehstromnetz verbunden, wobei die Sekundärwicklungen dieser Transformatoreinrichtung derart ausgeführt sind, dass ein Verschiebungswinkel auftritt. Auf der Einphasenseite werden vier Stellerspannungen zur Verfügung gestellt, die derart zueinander um einen Winkel gegeneinander verschoben sind, dass Spannungsoberschwingungen minimiert werden.

Diesen Konzepten eines statischen Umformers gemeinsam ist ein Spannungszwischenkreis, der einerseits wenigstens einen Zwischenkreiskondensator und andererseits einen Saugkreis aufweist. Ferner kann der Spannungszwischenkreis zur Begrenzung von auftretenden Überspannungen einen Bremssteller aufweisen. Außerdem weisen diese Konzepte einphasenseitig eine Vielzahl von GTO-Vierquadrantensteller mit zugehörigen Transformatorwicklungen auf, was zu einem aufwendigen Transformatordesign führt. Die hohe Anzahl von abschaltbaren Thyristoren, die auch als **G**ate-**T**urn-**O**ff-Thyristoren (GTO-Thyristoren) bezeichnet werden, oder **I**nsulated **G**ate **B**ipolar **T**ransistor (IGBT), sind mit aufwendigen Beschaltungen versehen.

Aus der Veröffentlichung mit dem Titel "Modulares Stromrichterkonzept für Netzkupplungsanwendung bei hohen Spannungen", abgedruckt im Tagungsband der ETG-Tagung 2002, ist ein Stromrichterkonzept für Netzkupplungen bekannt. Dieses Stromrichterkonzept weist zwei dreiphasige Stromrichter auf, die gleichspannungsseitig miteinander elektrisch leitend verbunden sind. Jeder Stromrichter weist entsprechend der Anzahl der Netzphasen jeweils ein Phasenmodul auf. Jedes Phasenmodul weist einen oberen und unteren Stromrichterzweig auf, der wenigstens ein zweipoliges Subsystem aufweist. Das vorgestellte Konzept weist pro Stromrichterventil vier zweipolige Subsysteme auf. Jedes Subsystem besteht aus einem Modulkondensator und zwei elektrisch in Reihe geschalteten abschaltbaren Halbleiterschaltern, wobei diese Reihenschaltung elektrisch parallel zum Modulkondensator geschaltet ist.

Der Erfindung liegt nun die Aufgabe zugrunde, einen statischen Umformer anzugeben, der einfacher aufgebaut und kostengünstiger ist.

Diese Aufgabe wird erfindungsgemäß mit dem kennzeichnenden Merkmal des Anspruchs 1 gelöst.

Dadurch, dass als drehstromseitiger Stromrichter ein netzgeführter Stromrichter und der einphasenseitige Stromrichter, bestehend aus wenigstens einem zweipoligen Subsystem pro Stromrichterzweig, vorgesehen sind, erhält man einen statischen Umformer, der eine einfache und kostengünstige Einspeiseschaltung aufweist und auf der Einphasenseite abschaltbare Halbleiterschalter verwendet. Außerdem weist dieser erfindungsgemäße statische Umformer keinen Zwischenkreiskondensator und auch keine Saugkreise mehr auf. Dadurch muss die Umrichteranlage nicht mehr für einen niederohmigen Zwischenkreis-Kurzschlussstrom ausgelegt werden. Ferner kann die i²t-Anforderung der Stromrichterventile des netzseitigen Stromrichters gegenüber einem Spannungszwischenkreis-Umrichter mit Diodeneinspeisung deutlich reduziert werden.

Ein weiterer Vorteil dieses erfindungsgemäßen statischen Umformers besteht darin, dass dieser statische Umformer einphasenseitig mittels einer Drossel mit einer Fahrdrahtleitung eines Bahnnetzes elektrisch leitend verbunden werden kann. Dieser Vorteil resultiert aus der Verwendung von zahlreichen zweipoligen Subsystemen in den Stromrichterzweigen des einphasenseitigen Stromrichters. Dadurch wird eine Einphasen-Wechselspannung generiert, die annähernd sinusförmig ist und deren Amplitude der Spannungsamplitude des Bahnnetzes entspricht.

Bei einer vorteilhaften Ausführungsform des statischen Umformers nach der Erfindung weist der drehstromseitige Stromrichter wenigstens zwei netzgeführte dreiphasige Stromrichter auf, die gleichspannungsseitig elektrisch in Reihe geschaltet sind, wobei dieser Stromrichter mittels eines Transformators mit zwei Sekundärwicklungen, zwischen denen ein vorbestimmter Verschiebungswinkel existiert, an ein speisendes Drehstromnetz angeschlossen ist. Dadurch wird die Oberschwingungsbelastung des speisenden Netzes wesentlich reduziert. Außerdem kann als Transformator ein üblicher Stromrichter-Transformator verwendet werden. Eine derartig ausgebildete Einspeiseschaltung weist eine Pulszahl von zwölf auf. Soll diese Einspeiseschaltung höhere Pulszahlen aufweisen, beispielsweise vierundzwanzig, so sind dafür vier netzgeführte dreiphasige Stromrichter vorzusehen, die gleichspannungsseitig elektrisch in Reihe zu schalten sind. Mit der Erhöhung der Anzahl netzgeführter dreiphasiger Stromrichter nimmt entsprechend die Anzahl der Sekundärwicklungen des Transformators zu. Jedoch verringern sich die drehstromnetzseitigen Stromoberschwingungen und ein gegebenenfalls erforderliches drehstromseitiges Filter kann entfallen.

Bei einer weiteren vorteilhaften Ausführungsform des statischen Umformers nach der Erfindung ist als netzgeführter Stromrichter mindestens eine B6-Diodenbrücke vorgesehen. Da diese eine ungesteuerte Ausführungsform ist, ist keine Steuerung und/oder Regelung mehr notwendig. Insbesondere ist keine schnelle Vorsteuerung der Einspeiseschaltung wie bei den bekannten statischen Umformern erforderlich. Ferner benötigt die Einspeiseschaltung des erfindungsgemäßen statischen Umformers einen geringeren Einbauplatz und weist geringere Verluste auf.

Außerdem weist diese weitere vorteilhafte Ausführungsform einen überbrückbaren Vorladewiderstand auf, der mindesten in einer der beiden Gleichspannungs-Sammelschiene angeordnet ist. Mittels dieses Vorladewiderstandes werden die Modulkondensatoren eines jeden zweipoligen Subsystems des einphasigseitigen Stromrichters geladen.

Bei einer weiteren vorteilhaften Ausführungsform des statischen Umformers nach der Erfindung ist als netzgeführter dreiphasiger Stromrichter mindestens eine B6-Thyristorbrücke vorgesehen. Gegenüber der Ausführungsform mit einer B6-Diodenbrücke wird nun kein überbrückbarer Vorladewiderstand mehr benötigt, da die Vorladung der Modulkondensatoren eines jeden zweipoligen Subsystems mittels der Thyristoren des drehstromseitigen Stromrichters erfolgt. Dazu ist eine Steuereinrichtung von Nöten, die jedoch aufwandsarm ist. Außerdem können mit dieser Ausführungsform des drehstromseitigen Stromrichters des statischen Umformers Spannungsschwankungen im speisenden Drehstromnetz ausgeregelt werden.

Bei einer weiteren vorteilhaften Ausführungsform des statischen Umformers nach der Erfindung ist als netzgeführter dreiphasiger Stromrichter ein Thyristor-Umkehrstromrichter vorgesehen. Gegenüber der Ausführung mit einer Thyristorbrücke kann nun Energie vom Einphasennetz zum speisenden Drehstromnetz rückgespeist werden. Diese Ausführungsform der Einspeiseschaltung des erfindungsgemäßen statischen Umformers weist gegenüber einer Einspeiseschaltung bekannter statischer Umformer einen erheblich geringeren Aufwand auf.

Zur weiteren Erläuterung der Erfindung wird auf die Zeichnung Bezug genommen, in der mehrere Ausführungsformen eines erfindungsgemäßen statischen Umformers schematisch dargestellt sind.
- FIG 1: zeigt eine erste Ausführungsform des statischen Umformers nach der Erfindung, in den
- FIG 2 und 3: sind Varianten der Einspeiseschaltung der Aus- führungsform des statischen Umformers nach FIG 1 dargestellt, die
- FIG 4: zeigt eine vorteilhafte Ausführungsform des statischen Umformers nach der Erfindung, woge- gen in der
- FIG 5: eine Variante der Ausführungsform nach FIG 4 dargestellt ist und die
- FIG 6 und 7: zeigen jeweils eine weitere Ausführungsform des statischen Umformers nach der Erfindung.

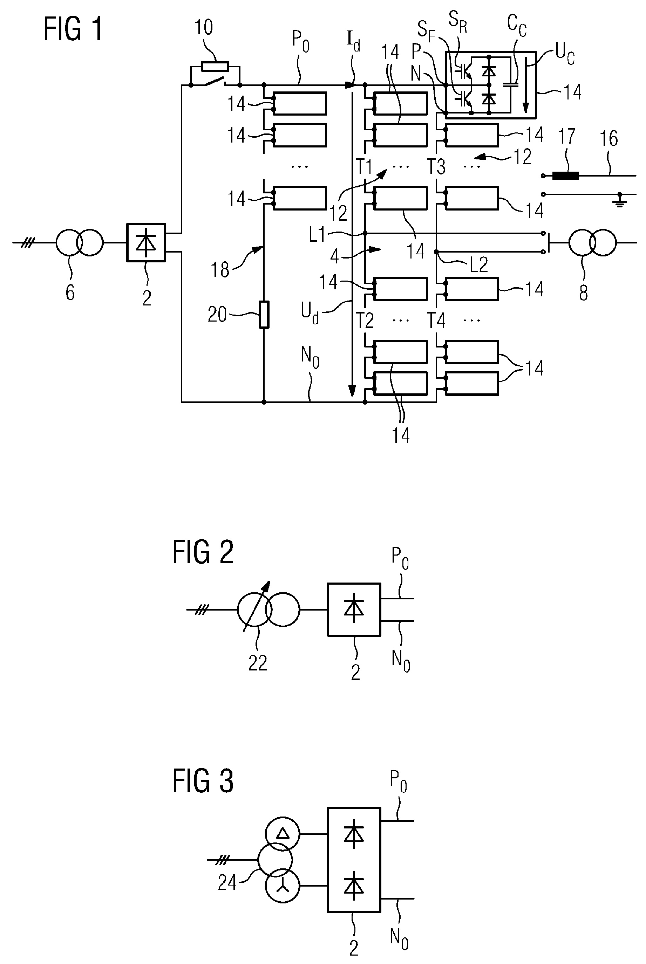

In der FIG 1 ist ein Schaltbild einer ersten Ausführungsform eines statischen Umformers nach der Erfindung schematisch dargestellt. Mit 2 sind ein drehstromseitiger Stromrichter, mit 4 ein einphasenseitiger Stromrichter, mit 6 ein drehstromseitiger Transformator und mit 8 ein einphasenseitiger Transformator bezeichnet. Als drehstromseitiger Stromrichter 2 ist ein netzgeführter Stromrichter in der Ausführungsform B6-Diodenschaltung vorgesehen. Drehspannungsseitig ist diese B6-Diodenbrücke mittels des Transformators 6 mit einem nicht näher dargestellten speisenden Drehstromnetz elektrisch leitend verbunden. Als speisendes Drehstromnetz ist beispielsweise ein Landesnetz vorgesehen. Gleichspannungsseitig ist der netzseitige Stromrichter mit einer positiven und negativen Gleichspannungs-Sammelschiene P₀ und N₀ elektrisch verknüpft. In der positiven Gleichspannungs-Sammelschiene P₀ ist zusätzlich ein überbrückbarer Vorladewiderstand 10 vorgesehen.

Der einphasenseitige Stromrichter 4 besteht aus zwei Phasenmodulen 12, die gleichspannungsseitig elektrisch parallel geschaltet sind und elektrisch mit der positiven und negativen Gleichspannungs-Sammelschiene P₀ und N₀ verknüpft sind. Jedes Phasenmodul 12 weist einen oberen und einen unteren Stromrichterzweig T1 bzw. T3 und T2 bzw. T4 auf. Jeweils ein Verknüpfungspunkt zweier elektrisch in Reihe geschalteter Stromrichterzweige T1,T2 bzw. T3,T4 eines jeden Phasenmoduls 12 bilden einen wechselspannungsseitigen Anschluss L1 und L2 für den einphasenseitigen Transformator 8. Dieser einphasenseitige Transformator 8 ist mit einem Einphasennetz verbunden. Bei diesem Einphasennetz handelt es sich beispielsweise um ein Bahnnetz. Dargestellt ist dieses Bahnnetz durch eine Fahrleitung 16. Alternativer kann der einphasenseitige Stromrichter 4 wechselspannungsseitig auch mittels einer Drossel 17 direkt an das Bahnnetz (Fahrleitung 16) angeschlossen werden.

Jeder Stromrichterzweig T1,...,T4 dieses einphasenseitigen Stromrichters 4 weist wenigstens ein zweipoliges Subsystem 14 auf. In der dargestellten Ausführungsform sind von n zweipoligen Subsystemen 14 eines Stromrichterzweige T1,...,T4 jeweils drei dargestellt. Ein derartiges zweipoliges Subsystem 14 weist einen Modulkondensator C_{C} und zwei abschaltbare Halbleiterschalter S_{F} und S_{R} auf. Diese beiden abschaltbaren Halbleiterschalter S_{F} und S_{R} sind elektrisch in Reihe geschaltet, wobei diese Reihenschaltung elektrisch parallel zum Modulkondensator C_{C} geschaltet ist. Ein Verbindungspunkt der elektrisch in Reihe geschalteten abschaltbaren Halbleiterschalter S_{F} S_{R} bildet eine Anschlussklemme P, wogegen ein Verbindungspunkt von Modulkondensator C_{C} und dem abschaltbaren Halbleiterschalter S_{F} eine Anschlussklemme N bildet. Diese Ausführungsform des zweipoligen Subsystems 14 und dessen Funktionsweise ist in der eingangs genannten Veröffentlichung "ETG-Tagung 2002" näher beschrieben. Weitere Ausführungsformen des zweipoligen Subsystems 14 können der DE 10 2005 045 090 A1 entnommen werden.

Wie bei den bekannten statischen Umformern kann zur Begrenzung von Überspannungen im Zwischenkreis ein Bremssteller 18 vorgesehen werden. Dieser Bremssteller 18 weist einen Bremswiderstand 20 und wenigstens ein zweipoliges Subsystem 14 auf, die zwischen der positiven und negativen Gleichspannungs-Sammelschiene elektrisch in Reihe geschaltet sind. Ein derartiger modularer Bremssteller 18 ist in der WO 2007/023061 A2 näher beschrieben.

Auffällig bei diesen statischen Umformern nach der Erfindung ist, dass kein Zwischenkreiskondensator und keine Saugkreise mehr vorhanden sind, so dass bei diesem statischen Umformer außerhalb der Submodule 14 nicht mehr auf niederinduktiven Aufbau geachtet werden muss. Außerdem tritt dadurch kein niederohmiger Zwischenkreis-Kurzschluss mehr auf.

In der FIG 2 ist eine Variante der Einspeiseschaltung (Seite Landesnetz) des statischen Umformers nach FIG 1 dargestellt. Diese Variante unterscheidet sich von der Einspeiseschaltung gemäß FIG 1 dadurch, dass anstelle des Transformators 6 ein Transformator 22 mit Stufenschalter vorgesehen ist. Mittels dieses Stufenschalters 22 kann man die Spannungs-Schwankungen des speisenden Drehstromnetzes ausgleichen, damit eine erzeugte Gleichspannung U_{d} unabhängig von Netzspannungs- und Lastschwankungen einstellbar ist.

In der FIG 3 ist eine weitere Variante der Einspeiseschaltung (Seite Landesnetz) des statischen Umformers nach FIG 1 dargestellt. Diese Variante unterscheidet sich von der Einspeiseschaltung gemäß FIG 1 dadurch, dass der drehstromseitige Stromrichter 2 zwei netzgeführte dreiphasige Stromrichter in B6-Diodenschaltung aufweist. Diese beiden netzgeführten dreiphasigen Stromrichter sind gleichspannungsseitig elektrisch in Reihe geschaltet. Drehspannungsseitig ist jeder netzgeführte Stromrichter mit einer Sekundärwicklung eines Transformators 24 elektrisch leitend verknüpft. Die eine Sekundärwicklung des Transformators 24 ist in Dreieck geschaltet, wogegen die andere Sekundärwicklung in Stern geschaltet ist. Somit beträgt der Verschiebungswinkel zwischen den sekundärseitigen Transformatorspannungen 30° el.. Dadurch weist diese Variante der Einspeiseschaltung eine Pulszahl von zwölf auf. Dadurch ist die Oberschwingungsbelastung des speisenden Drehstromnetzes gegenüber der Einspeiseschaltung gemäß FIG 1 reduziert. Soll die Oberschwingungsbelastung des speisenden Drehstromnetzes weiter reduziert werden, so muss die Anzahl der netzgeführten dreiphasigen Stromrichter erhöht werden.

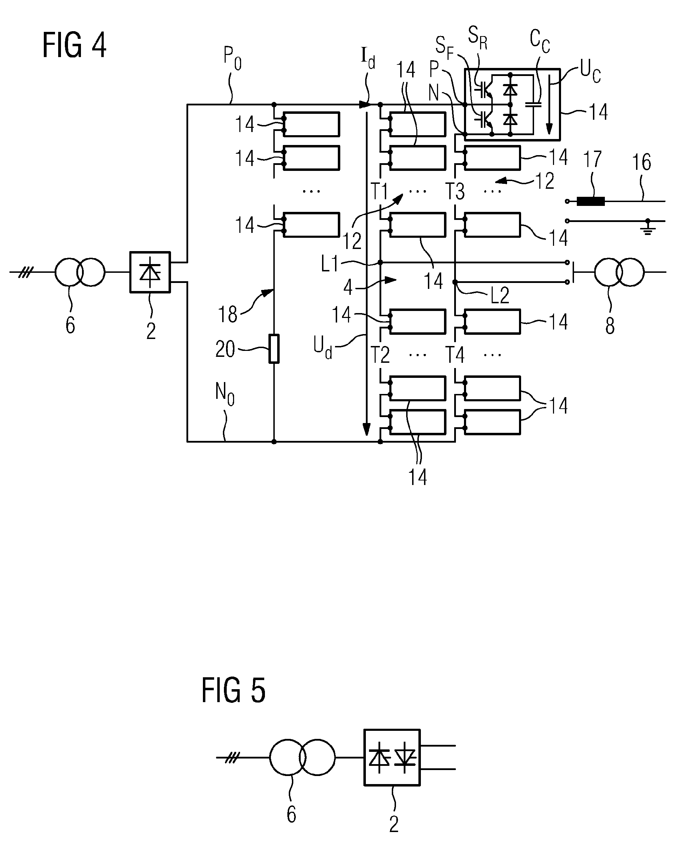

In der FIG 4 ist ein Schaltbild einer weiteren Ausführungsform des statischen Umformers nach der Erfindung dargestellt. Diese Ausführungsform unterscheidet sich von der Ausführungsform gemäß FIG 1 dadurch, dass als drehstromseitiger Stromrichter 2 ein netzgeführter dreiphasiger Stromrichter in B6-Thyristorschaltung vorgesehen ist. Durch die Verwendung wenigstens eines dreiphasigen Thyristorgleichrichters bzw. einer halbgesteuerten Brückenschaltung anstelle wenigstens eines dreiphasigen Diodengleichrichters kann auf einen überbrückbaren Vorladewiderstand 10 verzichtet werden. Die Ladung der Modulkondensatoren C_{c} eines jeden zweipoligen Subsystems 14 erfolgt in dieser Ausführungsform mittels des netzgeführten dreiphasigen Stromrichters in B6-Thyristorschaltung, beispielsweise während des Hochfahrens der Gleichspannung U_{d}. Gegenüber der Ausführungsform gemäß FIG 1 wird nun jedoch eine Regelung benötigt. Ein weiterer Vorteil dieser Ausführungsform gegenüber der Ausführungsform gemäß FIG 1 besteht darin, dass Spannungsschwankungen resultierend aus Netzspannungs- bzw. Lastspannungsschwankungen ausgeglichen werden können. D.h., es besteht die Möglichkeit einer Stabilisierung der Gleichspannung U_{d}. Die halbgesteuerte Brückenschaltung kann auch aus einer Diodenbrückenschaltung und einer Thyristorbrückenschaltung, die gleichspannungsseitig elektrisch in Reihe geschaltet sind, aufgebaut werden.

Die FIG 5 zeigt eine weitere Variante der Einspeiseschaltung des statischen Frequenzumformers nach FIG 4. Bei dieser Variante ist als drehstromseitiger Stromrichter 2 des statischen Umformers wenigstens ein dreiphasiger Thyristor-Umkehrstromrichter vorgesehen. Ein Thyristor-Umkehrstromrichter besteht aus zwei Thyristorbrücken, die antiparallel geschaltet sind. Dadurch besteht nun die Möglichkeit, dass zusätzlich Energie vom Bahnnetz in ein Landesnetz rückgespeist werden kann. Der Aufwand gegenüber dem drehstromseitigen Stromrichter des statischen Umformers gemäß der Veröffentlichung mit dem Titel "Statischer Umformer zur Kupplung von Bahnnetzen und Landesnetzen" ist wesentlich geringer nicht nur hinsichtlich der Hardware sondern auch hinsichtlich der Steuerung.

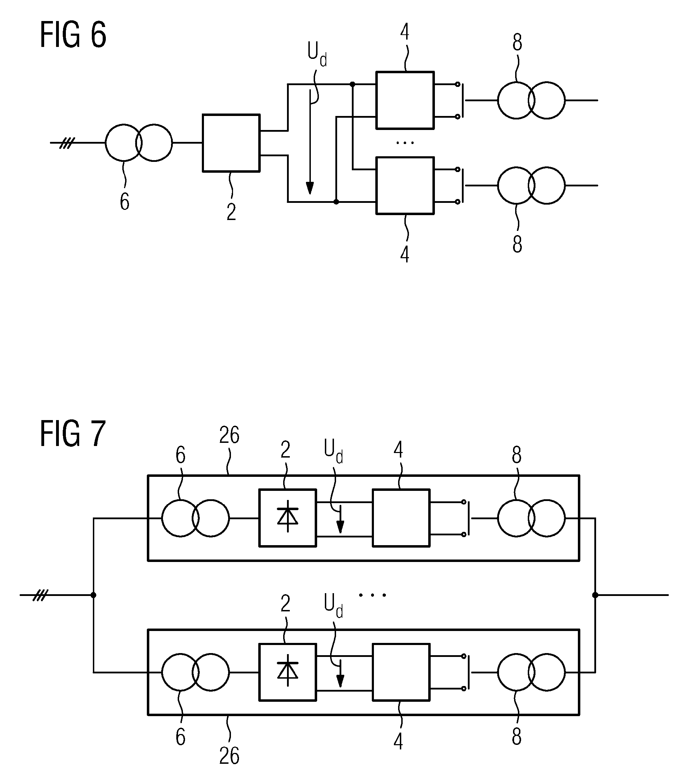

In der FIG 6 ist ein Schaltbild einer weiteren Ausführungsform des statischen Umformers nach der Erfindung schematisch dargestellt. Diese Ausführungsform weist gegenüber der Ausführungsform gemäß FIG 1 einphasenseitig wenigstens einen weiteren Stromrichter 4 auf, der ebenfalls als modularer Mehrpunkt-Stromrichter, auch als Modular Multilevel Converter (MMLC bzw. M2C) bezeichnet, ausgebildet ist. Gleichspannungsseitig sind diese einphasenseitigen Stromrichter 4 elektrisch parallel geschaltet. Wechselspannungsseitig sind diese Stromrichter 4 mittels wenigstens eines Transformators 8 mit einem Bahnnetz elektrisch leitend verbunden. Durch diese einphasenseitigen Stromrichter 4, die vom dreiphasenseitigen Stromrichter 2 gespeist werden, kann die installierte Stromrichter-Bauleistung des dreiphasigseitigen Stromrichters 2 voll ausgenutzt werden. D.h., die installierte Leistung auf Seiten der Einspeisung (Drehstromseite) wird auf die einphasenseitigen Stromrichter 4 (Bahnseite) aufgeteilt. Dadurch verringert sich der Aufwand für den statischen Umformer. Wird einphasenseitig zum Stromrichter 4 ein weiterer Stromrichter 4 hinzugefügt, so erhöht sich die in einem Bahnnetz eingespeiste Leistung, vorausgesetzt, dass der drehstromseitige Stromrichter 2 diese Leistung aus einem Landesnetz entnehmen kann.

In der FIG 7 ist ein Schaltbild einer weiteren Ausführungsform eines statischen Umformers schematisch dargestellt. Bei dieser Ausführungsform bildet der statische Umformer gemäß FIG 1 einen Umformerblock 26 mit einer Einheitsleistung. Um einen statischen Umformer für eine Leistung größer dieser Einheitsleistung zu erstellen, werden wenigstens zwei Umformerblöcke 26 elektrisch parallel geschaltet. In der Ausführungsform gemäß der FIG 7 sind von n Umformerblöcken 26 nur zwei dargestellt.

Wird einer der beiden Umformerblöcke 26 als Netzkupplung gemäß der Veröffentlichung "ETG-Tagung 2002" ausgebildet, so kann dieser Umformerblock die Blindleistung des anderen Umformerblocks 26 bereitstellen. Außerdem können die Oberschwingungsströme, verursacht von der Einspeiseschaltung des ersten Umformerblock 26, durch den zweiten Umformerblock, dessen drehstromseitiger Stromrichter 2 selbstgeführt ausgebildet ist, kompensiert werden. Ferner kann Energie aus einem Bahnnetz über den Umformerblock mit einem drehstromseitigen selbstgeführten - und damit rückspeisefähigen - Stromrichter in ein Landesnetz erfolgen. Durch die Verwendung eines Umformerblocks mit einem drehstromseitigen selbstgeführten Stromrichter kann Blindleistung zwischen diesem Umformerblock und einem Landesnetz ausgetauscht werden, wodurch die Netzspannung dieses Landesnetzes gestützt wird, so dass der Umrichterblock 26 mit einem netzgeführten dreiphasigen Stromrichter ausgeführten drehstromseitigen Stromrichter 2 mit einer konstanten Netzspannung versorgt wird.

Grundlage dieses erfindungsgemäßen statischen Umformers ist die Kombination eines oder mehrerer netzgeführter Stromrichter mit einem modularen Mehrpunktstromrichter mit zweipoligen Subsystemen. Daraus ergibt sich ein statischer Umformer, der gegenüber bekannten statischen Umformern einen wesentlich geringeren Aufwand aufweist, der im Zwischenkreis keine Energiespeicher (Zwischenkreiskondensator, Saugkreiskondensator, Saugkreisdrossel) aufweist, der wesentlich kostengünstiger ist, der einen geringeren Platz beansprucht, der einen geringeren Geräuschpegel aufweist, der nicht niederinduktiv aufgebaut sein muss und der eine geringere Verlustleistung aufweist.

## Patentansprüche

1. Statischer Umformer mit einem drehstrom- und einphasenseitigen Stromrichter (2,4), die gleichspannungsseitig miteinander elektrisch leitend verknüpft sind, und die wechselspannungsseitig jeweils mit einem speisenden und einem aufnehmenden Netz elektrisch leitend verbunden sind, **dadurch gekennzeichnet, dass** als drehstromseitiger Stromrichter (2) wenigstens ein netzgeführter dreiphasiger Stromrichter vorgesehen ist und dass der einphasenseitige Stromrichter (4) zwei gleichspannungsseitig parallel geschaltete Phasenmodule (12) aufweist, deren obere und untere Stromrichterzweige (T1,T3;T2,T4) jeweils wenigstens ein zweipoliges Subsystem (14) aufweisen.

2. Statischer Umformer nach Anspruch 1, **dadurch gekennzeichnet, dass** der drehstromseitige Stromrichter (2) wenigstens zwei netzgeführte dreiphasige Stromrichter aufweist, die gleichspannungsseitig elektrisch in Reihe geschaltet sind, die mittels eines Stromrichter-Transformators ein Standard-Transformator (24) mit zwei Sekundärwicklungen und einem vorbestimmten Verschiebungswinkel mit einem speisenden Netz verbunden wird.

3. Statischer Umformer nach Anspruch 1 oder 2, **dadurch gekennzeichnet, dass** als netzgeführter dreiphasiger Stromrichter eine B6-Diodenbrücke vorgesehen ist und dass in einer positiven oder negativen Gleichspannungs-Sammelschiene (P₀,N₀) ein überbrückbarer Vorladewiderstand (10) angeordnet ist.

4. Statischer Umformer nach Anspruch 1 oder 2, **dadurch gekennzeichnet, dass** als netzgeführter dreiphasiger Stromrichter eine halbgesteuerte Brückenschaltung vorgesehen ist.

5. Statischer Umformer nach Anspruch 1 oder 2, **dadurch gekennzeichnet, dass** als netzgeführter dreiphasiger Stromrichter eine B6-Thyristorbrücke vorgesehen ist.

6. Statischer Umformer nach Anspruch 4, **dadurch gekennzeichnet, dass** als halbgesteuerte Brückenschaltung eine B6-Diodenbrücke und eine B6-Thyristorbrücke vorgesehen sind, die gleichspannungsseitig elektrisch in Reihe geschaltet sind.

7. Statischer Umformer nach Anspruch 1 oder 2, **dadurch gekennzeichnet, dass** als netzgeführter dreiphasiger Stromrichter ein Thyristor-Umkehrstromrichter vorgesehen ist.

8. Statischer Umformer nach Anspruch 1, **dadurch gekennzeichnet, dass** der drehstromseitige Stromrichter (2) mittels eines Transformators (22) mit Stufenschalter mit einem speisenden Netz verknüpft ist.

9. Statischer Umformer nach einem der vorgenannten Ansprüche, **dadurch gekennzeichnet, dass** der einphasenseitige Stromrichter (4) wechselspannungsseitig mittels eines Transformators (8) mit einem Bahnnetz verknüpft ist.

10. Statischer Umformer nach einem der Ansprüche 1 bis 8, **dadurch gekennzeichnet, dass** der einphasenseitige Stromrichter (4) wechselspannungsseitig mittels einer Drossel (17) mit einem Bahnnetz verknüpft ist.

11. Statischer Umformer nach einem der vorgenannten Ansprüche, **dadurch gekennzeichnet, dass** ein weiterer einphasenseitiger Stromrichter (4) vorgesehen ist, der zwei gleichspannungsseitig parallel geschaltete Phasenmodule (12) aufweist, deren obere und untere Stromrichterzweige (T1,T3;T2,T4) jeweils wenigstens ein zweipoliges Subsystem (14) aufweisen, und dass dieser weitere einphasenseitige Stromrichter (4) gleichspannungsseitig elektrisch parallel zum ersten einphasenseitigen Stromrichter (4) geschaltet ist.

12. Statischer Umformer nach einem der Ansprüche 1 bis 10, **dadurch gekennzeichnet, dass** ein weiterer Umrichterblock (26) vorgesehen ist, der drehstrom- und einphasenseitig jeweils einen Stromrichter (2,4) mit drei und zwei gleichspannungsseitig parallel geschalteten Phasenmodulen (12) aufweist, deren obere und untere Stromrichterzweige jeweils wenigstens ein zweipoliges Subsystem (14) aufweisen, und dass drehstrom- und einphasenseitig jeweils ein Transformator (6,8) vorgesehen ist, die primärseitig mit dem speisenden und dem aufnehmenden Netz elektrisch leitend verbunden sind.

13. Statischer Umformer nach Anspruch 12, **dadurch gekennzeichnet, dass** ein weiterer Umrichterblock drehstromseitig einen selbstgeführten Stromrichter aufweist.
